# EUROPEAN PATENT APPLICATION

(11) **EP 1 927 742 A1**
(43) Date of publication of application: **04.06.2008**
(21) Application number: 06256004.0
(22) Date of filing: 23.11.2006
(51) Int. Cl.: F02D 41/20, H01L 41/04

(54) **A method of operating a piezoelectric device**

(71) Applicant: Delphi Technologies, Inc., Troy, Michigan 48007 (US)
(72) Inventor: Sykes, Martin, Kent, ME8 8RB (GB); Hopley, Daniel, Kent, BR7 5EG (GB)
(74) Representative: Hopley, Joanne Selina

(57) **Abstract**

A method of operating a piezoelectric device (2) having a piezoelectric actuator (4) including activating the device (2) by applying a primary drive energy pulse to the actuator (4), deactivating the device (2) by terminating the primary drive energy pulse applied to the actuator (4), determining a fluctuating actuator energy signature, and applying at least one secondary drive energy pulse, preferably a sequence of drive energy pulses, to the actuator (4) a predetermined time after the application of the primary drive energy pulse so as to attenuate the fluctuating energy signature.

## Description

### Technical Field

The invention relates to a method of operating a piezoelectric device. More specifically, the invention relates to a method of operating a piezoelectrically actuated fuel injector in order to decrease the level of noise generated thereby.

### Background to the Invention

In a direct injection internal combustion engine, a fuel injector is provided to deliver a charge of fuel to a combustion chamber prior to ignition. Typically, the fuel injector is mounted in a cylinder head with respect to the combustion chamber such that its tip protrudes slightly into the chamber in order to deliver a charge of fuel thereto.

One type of fuel injector that is particularly suited for use in a direct injection engine is a so-called piezoelectric injector. Such an injector allows precise control of the timing and total delivery volume of a fuel injection event. This permits improved control over the combustion process which is beneficial in terms of exhaust emissions.

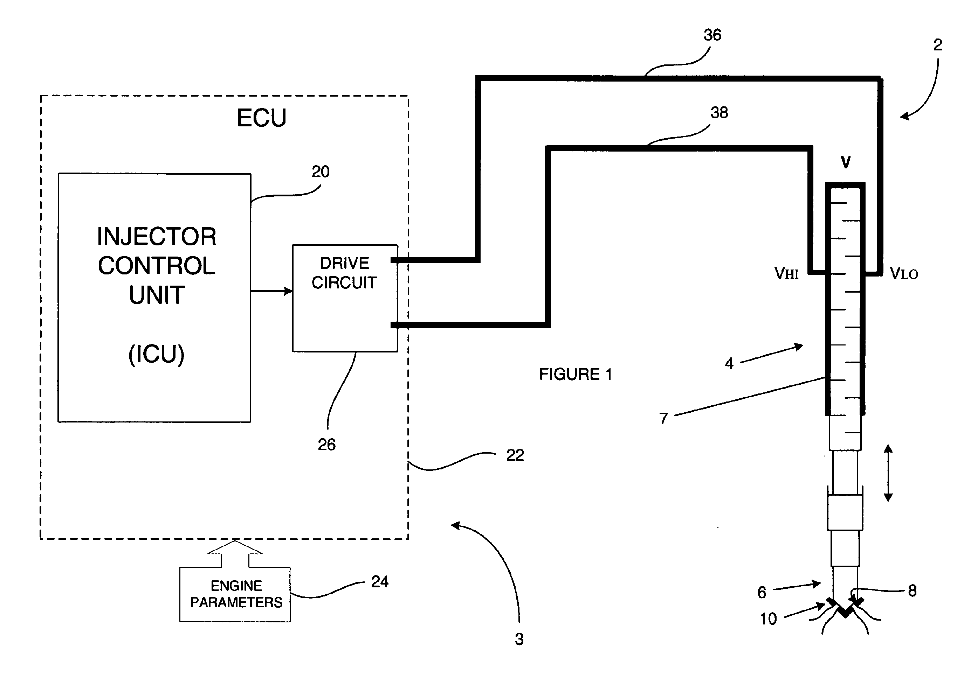

A known piezoelectric injector 2 and its associated control system 3 are shown schematically in Figure 1. The piezoelectric injector 2 includes a piezoelectric actuator 4 that is operable to control the position of an injector valve needle 6 relative to a valve needle seat 8. As known in the art, the piezoelectric actuator 4 includes a stack 7 of piezoelectric elements that expands and contacts in dependence on the voltage across the stack 7. The axial position, or 'lift', of the valve needle 6 is controlled by applying a variable voltage 'V' to the piezoelectric actuator 4. Although not shown in Figure 1, it should be appreciated that, in practice, the variable voltage would be applied to the actuator by connecting a power supply plug to terminals of the injector 2.

By application of an appropriate voltage to the actuator 7, the valve needle 6 is caused either to disengage the valve seat 8, in which case fuel is delivered into an associated combustion chamber (not shown) through a set of nozzle outlets 10, or is caused to engage the valve seat 8, in which case fuel delivery through the outlets 10 is prevented.

For further background to the invention, an injector of this type is described in the applicant's European Patent No. EP 0955901B. Such fuel injectors may be employed in compression ignition (diesel) engines or spark ignition (petrol) engines.

Although piezoelectric injectors are adept at delivering precise quantities of fuel with accurate timing, they also have associated disadvantages. For example, during use, a piezoelectric injector emits vibrations due to the frequency of the drive voltage that is applied to the piezoelectric actuator. The vibrations travel down the injector, or through an injector positioning/clamping arrangement, and are transmitted to the engine. The engine accentuates certain frequencies of vibration such that at least a portion of the vibrations can be detected by the human ear.

At moderate and high engine speeds, the emitted noise of the injectors is drowned out by the combustion noise of the engine. However, at low engine speeds, particularly at engine idle and with the bonnet/hood raised, the audible injector noise is apparent. The detectable noise contributes to the overall noise/vibration/harshness (NVH) characteristics of the vehicle.

The optimisation of NVH characteristics is a significant factor in successful vehicle design since it influences the buying decision of the consumer. It is therefore desirable to reduce the amount of noise emitted by the injector in an effort to reduce the overall level of noise perceived by the user of the vehicle.

### Summary of the Invention

Against this background, the invention provides a method of operating a piezoelectric device having a piezoelectric actuator including activating the device by applying a primary drive energy pulse to the actuator, deactivating the device by terminating the primary drive energy pulse applied to the actuator, determining a fluctuating actuator energy signature and applying at least one secondary drive energy pulse to the actuator a predetermined time after the application of the primary drive energy pulse so as to attenuate the fluctuating actuator energy signature.

The method of the invention is applicable to de-energise-to-inject injectors and also energise-to-inject injectors.

The step of determining the fluctuating actuator energy signature may occur in an off line environment e.g. system testing, or may take place in real time, during operation of the device.

By virtue of the principle of superposition, the invention provides the potential to substantially eliminate the fluctuating energy signature that is experienced following an activation of the actuator.

In order to avoid activating the device following the primary drive energy pulse, preferably the at least one secondary drive energy pulse has a magnitude that is less than the primary drive energy pulse such that the device is not activated.

Although a reduction of noise is achievable using a wide range of frequencies of the secondary drive energy pulse, it is preferred that the at least one secondary drive energy pulse has a frequency selected to be substantially equal to the frequency of the fluctuating actuator energy signature and, moreover, phase-shifted therefrom by approximately one hundred and eighty degrees.

In one embodiment of the invention, the start of the at least one secondary drive energy pulse is triggered a predetermined time after the initiation of the primary drive energy pulse. Alternatively, however, the start of the at least one secondary drive energy pulse may be triggered a predetermined time after the termination of the primary drive energy pulse.

In the preferred embodiment the predetermined time for applying the at least one drive energy pulse is calculated based on the length of the primary drive energy pulse. However, in an alternative embodiment, the start of the secondary drive energy pulse may be determined in real-time as part of a closed loop control system. Advantageously, this provides the facility to enable the initiation point of the secondary drive energy pulse sequence to be tuned so as to achieve the greatest reduction in generated noise.

In addition, or in the alternative, a further secondary drive energy pulse may be applied to the actuator prior to the primary drive energy pulse with the objective of generating electrical activity within the injector prior to an injection event that may improve the way the injector responds during, and after, an injection event.

In the preferred embodiment, the at least one secondary drive energy pulse is a sequence of a plurality of pulses that are applied to the actuator for a predetermined time period, the length of which is calculated based on the natural duration of the fluctuating energy signature.

In order to avoid unwanted electrical excitation of the actuator, preferably the method includes reducing the magnitude of successive pulses in the sequence.

In a second aspect, the invention provides method of operating a piezoelectric device having a piezoelectric actuator including activating the device by applying a primary drive energy pulse to the actuator, deactivating the device by terminating the primary drive energy pulse applied to the actuator, determining a fluctuating actuator energy signature, and applying at least one secondary drive energy pulse to the actuator a predetermined time before the application of the primary drive energy pulse so as to attenuate the fluctuating actuator energy signature.

It should be appreciated that optional and preferred features of the first aspect of the invention may be combined with the second aspect of the invention, either alone or in combination.

According to a third aspect of the invention there is provided a computer program product comprising at least one computer program software portion which, when executed in an executing environment, is operable to implement the method of the first and second aspects of the invention as described above.

In a fourth aspect of the invention there is provided a data storage medium having the or each computer software portion according to the third aspect of the invention

In a fifth aspect of the invention, there is provided a microcomputer provided with a data storage medium according to the fourth aspect of the invention.

### Brief Description of the Drawings

Reference has already been made to Figure 1 which is a schematic representation of a known piezoelectric injector 2 and its associated control system. In order that it may be more readily understood, the invention will now be described with reference also to the following figures, in which:
Figure 2 is a circuit diagram of the injector drive circuit in Figure 1;
Figure 3 is a flow chart of a method in accordance with an embodiment of the invention, which may be implemented by the drive circuit of Figure 2;
Figures 4a and 4b are waveform profiles of voltage measured across the terminals of the injector, and current flowing through current sensing means of the injector drive circuit of Figure 2, according to the control method of Figure 3;
Figures 4c, 4d and 4e are state diagrams of charge select, discharge select and injector select switches according to the control method of Figure 3;
Figure 5a is an enlarged view of the oscillation period T_{P} in Figure 4a; and
Figures 5b and 5c are waveform profiles of injector charge transfer and injector current, respectively, according to a noise suppression process of an embodiment of the invention.

### Detailed Description of the Preferred Embodiments

Referring again to Figure 1, the piezoelectric injector 2 is controlled by an injector control unit 20 (ICU) that forms an integral part of an engine control unit 22 (ECU). The ECU 22 monitors a plurality of engine parameters 24 and calculates an engine power requirement signal (not shown) which is input to the ICU 20. In turn, the ICU 20 calculates a required injection event sequence to provide the required power for the engine and operates an injector drive circuit 26 accordingly. The injector drive circuit 26 is connected to the injector 2 by way of first and second power supply leads 36, 38 by which means the drive circuit 26 is operable to apply a differential voltage to the actuator 4. Although the drive circuit 26 is shown as integral to the ECU 22 in Figure 1, it should be appreciated that this is not essential to the invention.

In order to initiate an injection, the injector drive circuit 26 causes the differential voltage applied to the injector 2 to transition from a high voltage (typically 200 V) at which no fuel delivery occurs, to a relatively low voltage (typically -55 V), which causes the actuator 4 to contract, thus lifting the valve needle 6 away from the valve needle seat 8.

An injector responsive to such a voltage transition is referred to as a 'de-energise to inject' injector and is operable to deliver one or more injections of fuel within a single injection event. For example, the injection event may include one or more so-called 'pre-' or 'pilot' injections, a main injection, and one or more 'post' injections. In general, several such injections within a single injection event are preferred to increase combustion efficiency of the engine.

It should be appreciated that although only one injector is shown in Figure 1, in practice several fuel injectors would be provided under the collective control of the ICU 20 and the drive circuit 26.

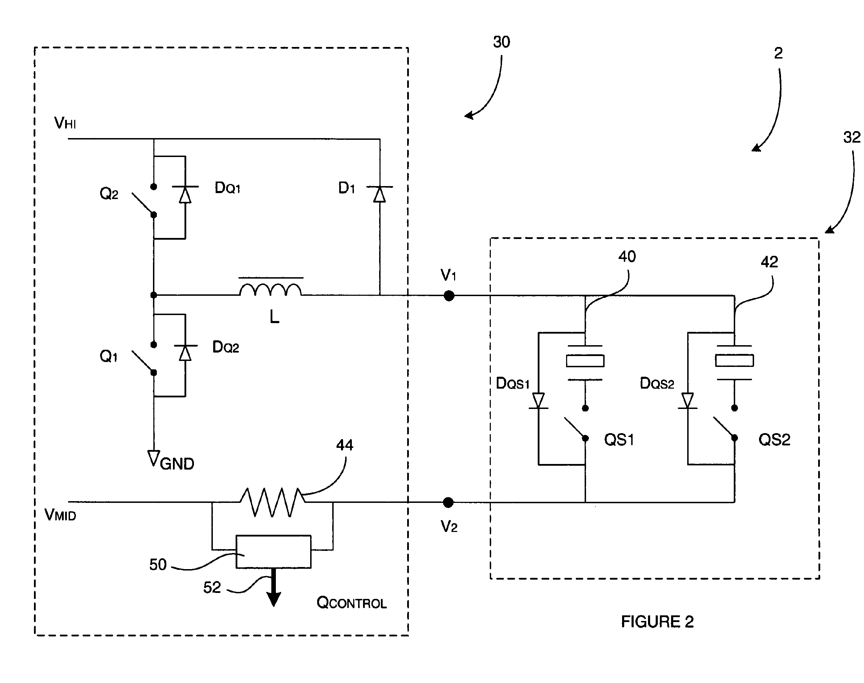

Referring also to Figure 2, the drive circuit 26 includes an injector charge/discharge switching circuit 30 (hereinafter 'switching circuit') that is connected to an injector bank circuit 32.

The switching circuit 30 includes three input voltage rails: a high voltage rail V_{HI} (typically 255 V), a mid voltage rail V_{MID} (typically 55 V), and a ground rail GND. Furthermore, the switching circuit 30 includes a high side voltage output V1 and a low side voltage output V2 and is operable to connect the high side voltage output V1 to either the high voltage rail V_{HI} or the ground rail GND, through an inductor L, by means of first and second switch means Q1, Q2.

The switching circuit 30 is also provided with a diode D1 that connects the high side voltage output V1 to the high voltage rail V_{HI}. The diode D1 is oriented to permit current to flow from the high side voltage output V1 to the high voltage rail V_{HI} but to prevent current flow from the high voltage rail V_{HI} to the high side voltage output V1.

The injector bank circuit 32 provides a means to group several injectors together (only two are shown in Figure 2) and comprises first and second branches 40, 42, both of which are connected in parallel between the high side voltage output V1 and the low side voltage output V2 of the switching circuit 30. Thus, the high side voltage output V1 of the switching circuit 30 is also a high side voltage input to the bank circuit 32. Likewise, the low side voltage output V2 of the switching circuit 30 is a low side voltage input to the bank circuit 32.

Each branch 40, 42 of the injector bank circuit 32 includes a respective injector INJ1, INJ2 and an associated injector select switch QS1, QS2 by which means either one of the injectors INJ1, INJ2 can be selected for operation, as will be described later. Each injector select switch QS1, QS2 includes a respective diode D_{QS1}, D_{QS2} connected across it for the purposes of injector charging without requiring activation of the associated injector select switch. It should be appreciated that although the first and second injectors INJ1 and INJ2 are shown as integral to the bank circuit 32 in Figure 2, in practice the bank circuit 32 would be remote from the injectors INJ1, INJ2 and connected thereto by way of power supply leads.

It should be mentioned at this point that the piezoelectric actuator 4 of each injector INJ1, INJ2 is considered electrically equivalent to a capacitor, the voltage difference between V1 and V2 determining the amount of electrical charge stored by the actuator 4 and, thus, the lift position of the injector valve needle 6.

The first switch means Q1 of the switching circuit 30, when activated, connects the high side voltage output V1 to the ground rail GND via the inductor L. Therefore, charge from the selected injector (hereafter the selected injector will be referred to as INJ1) is permitted to flow from the injector INJ1, through the inductor L and switch means Q1 to the ground rail GND, thereby serving to discharge the selected injector INJ1 during an injector discharge phase. Hereinafter, the first switch means Q1 will therefore be referred to as the 'discharge select switch'. A diode D_{Q1} is connected across the second switch means Q2 and is oriented to permit current to flow from the inductor L to the high voltage rail V_{HI} when the discharge select switch Q1 is deactivated, thus guarding against voltage peaks across the inductor L.

In contrast, the second switch means Q2, when activated, connects the high side voltage output V1 to the high voltage rail V_{HI} via the inductor L. In circumstances where the injector INJ1 is discharged, activating the second switch means Q2 causes charge to flow from the high voltage rail V_{HI}, through the second switch means Q2 and the inductor L, and into the injector INJ1, during an injector charge phase, until an equilibrium voltage is reached (the voltage due to charge stored by the actuator 4 equals the voltage difference between the high side and the low side voltage outputs V1, V2). Hereinafter, the second switch means Q2 will be referred to as the 'charge select switch'. A diode D_{Q2} is connected across the discharge select switch Q1 and is oriented to permit current to flow from the ground rail GND through the inductor L to the high side voltage output V1 when the charge select switch Q2 is deactivated, thus guarding against voltage peaks across the inductor L.

It should be appreciated that the inductor L constitutes a bidirectional current path since current flows in a first direction through the inductor L during the discharge phase and in an opposite direction during the injector charge phase.

The low side voltage output V2 of the injector bank circuit 32 is connected to the mid voltage rail V_{MID} via a voltage sense resistor 44. A current sensing and comparator means 50 (hereinafter 'comparator module') is connected in parallel with the sense resistor 44 and is operable to monitor the current flowing therethrough. In response to the current flowing through the resistor 44, the comparator module 50 outputs a control signal 52 (hereafter Q_{CONTROL}) that controls the activation status of the discharge select switch Q1 and the charge select switch Q2 so as to regulate the peak current flowing from, or to, the injector INJ1. In effect, the comparator module 50 controls the activation status of the switches Q1 and Q2 to 'chop' the injector current between maximum and minimum current limits and achieve a predetermined average charge or discharge current level that is commanded by the ICU 20. In the art, it is known to refer to the commanded average charge or discharge current level as the current 'set point'. By this means, a high degree of control is afforded over the amount of electrical charge that is transferred from the injector during a discharge phase and, conversely, to the injector during a charge phase.

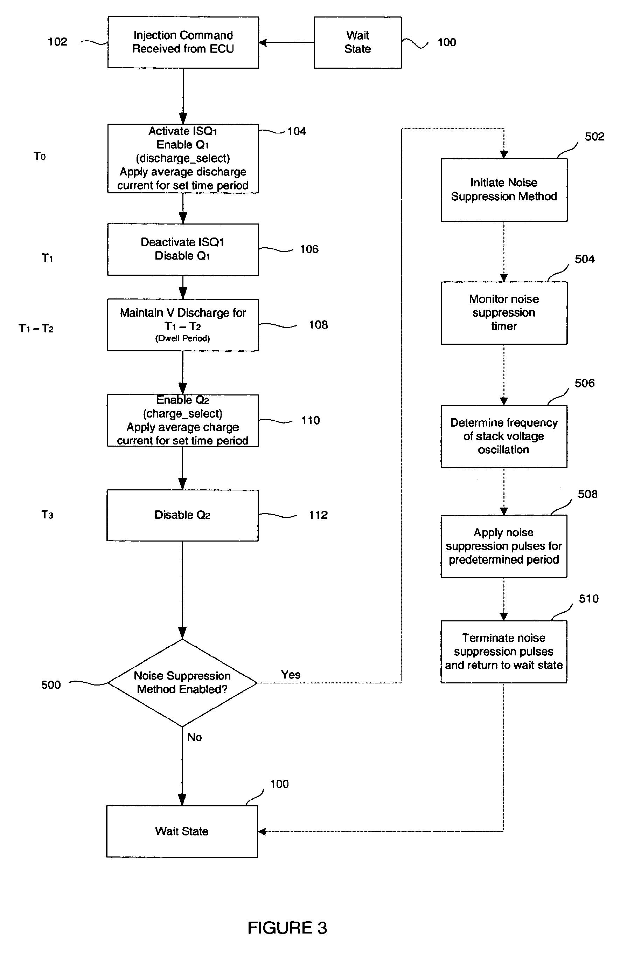

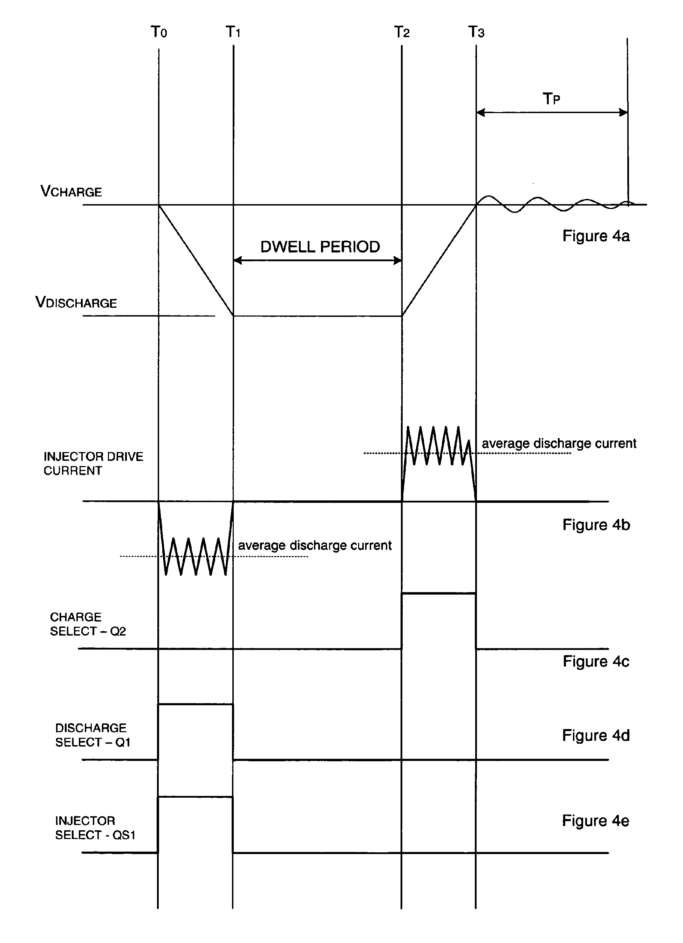

The operation of the injector drive circuit 26 during a discharge phase, followed by a charge phase, is described below with reference to Figure 3 and Figures 4a to 4e.

Initially, prior to time T₀, the injector drive circuit 26 is at equilibrium, that is to say both injectors INJ1 and INJ2 are fully charged such that no fuel injection is taking place. In these circumstances, the ICU 20 is in a wait state, indicated at step 100, awaiting an injection command signal from the ECU 22.

Following receipt of an injection command from the ECU 22 at step 102, the ICU 20 selects the injector that it is required to operate at step 104. As mentioned above, for the purposes of this description, the selected injector is the first injector, INJ1. At substantially the same time, the ICU 20 initiates the discharge phase by enabling the discharge select switch Q1 so as to cause the injector INJ1 to discharge. The comparator module 50 outputs the Q_{CONTROL} signal between T₀ and T₁ to repeatedly deactivate and reactivate the discharge select switch Q1 such that the current remains within predetermined limits and, therefore, a predetermined average discharge current level is maintained through the injector INJ1.

The ICU 20 applies the predetermined average discharge current level for a period of time (from T₀ to T₁) that is sufficient to transfer a predetermined amount of charge from the injector INJ1, hence initiating an injection event. The timing of the discharge phase is read from a timing map that relates discharge phase time against fuel delivery volume. At time T₁ (step 106), the ICU 20 deactivates the first injector select switch QS1 and disables the discharge select switch Q1, thus terminating the control signal Q_{CONTROL}, to prevent the injector INJ1 discharging further. Thus, during the time period T₀ to T₁ the voltage across the injector INJ1 drops from a charged voltage level V_{CHARGE} to a discharged voltage level V_{DISCHARGE}, as indicated in Figure 4a.

At step 108, the ICU 20 maintains the injector INJ1 at the discharged voltage level V_{DISCHARGE} for a predetermined dwell period, T₁, to T₂, such that the injector valve needle 6 is held open to perform an injection. At the end of the dwell period, at step 110, the ICU 20 enables the charge select switch Q2 in order to start the injector charge phase so as to terminate injection. As a result, the high side voltage output V1 of the switching circuit 30 is connected to the high voltage rail V_{HI} and charge begins to transfer into the injector INJ1.

As the current flowing into the injector INJ1 increases, the comparator module 50 monitors the current flowing through the sense resistor 44 and controls the activation status of the charge select switch Q2, via the control signal Q_{CONTROL}, to ensure a predetermined average charging current level. Between time T₂ and T₃, the ICU 20 applies the predetermined average charging current level to the injector INJ1 for a period of time that is sufficient to transfer a predetermined amount of charge onto the injector INJ1, hence terminating the injection event. At time T₃ (step 112), the ICU 20 disables the charge select switch Q2 and returns to the waiting step 100 ready for initiation of another injection event.

The voltage waveform applied to the injector INJ1 during the discharge period, dwell period and charge period as described above may be referred to as a primary drive energy pulse.

Although the above described method achieves an injection event adequately by discharging and then recharging the injector INJ1, it has been observed that after the charge select switch Q2 has been disabled at time T₃ (step 112) the measured voltage across the injector INJ1 fluctuates for a period of time, as indicated in Figure 4a as an 'oscillation period' T_{P}. Put another way, the actuator gives rise to a detectable fluctuating energy signature.

Upon activation of the injector INJ1, mechanical vibrations and pressure wave effects within the fuel passages of the injector INJ1 generate hydrodynamic forces that act on the actuator 4 so as to cause a positive voltage component followed by a negative voltage component that reduce in magnitude over the course of the oscillation period T_{P}. This fluctuating actuator energy signature during the oscillation period T_{P} is known in the art as electrical ringing.

The oscillatory voltage waveform that is measurable across the injector INJ1 is approximately sinusoidal and the pressure wave effects within the fuel passages of the injector, and the mechanics of the actuator 4, dictate the frequency, amplitude and phase of the waveform.

The inventors have identified that the magnitude of oscillation can be reduced by transferring an appropriate amount of charge from the injector during a positive component of oscillation and allowing charge to transfer to the injector during a negative component of oscillation. In this way, a significant proportion of the noise that is emitted from the injector can be suppressed.

After the charge switch Q2 is disabled at step 112 following the end of a charge phase, the flow of control thereafter passes to decision step 500 at which point the ICU 20 checks whether the noise suppression method of the invention is enabled within the ECU 22. If the noise suppression method is enabled, the process proceeds to step 502 at which point the noise suppression process is initiated.

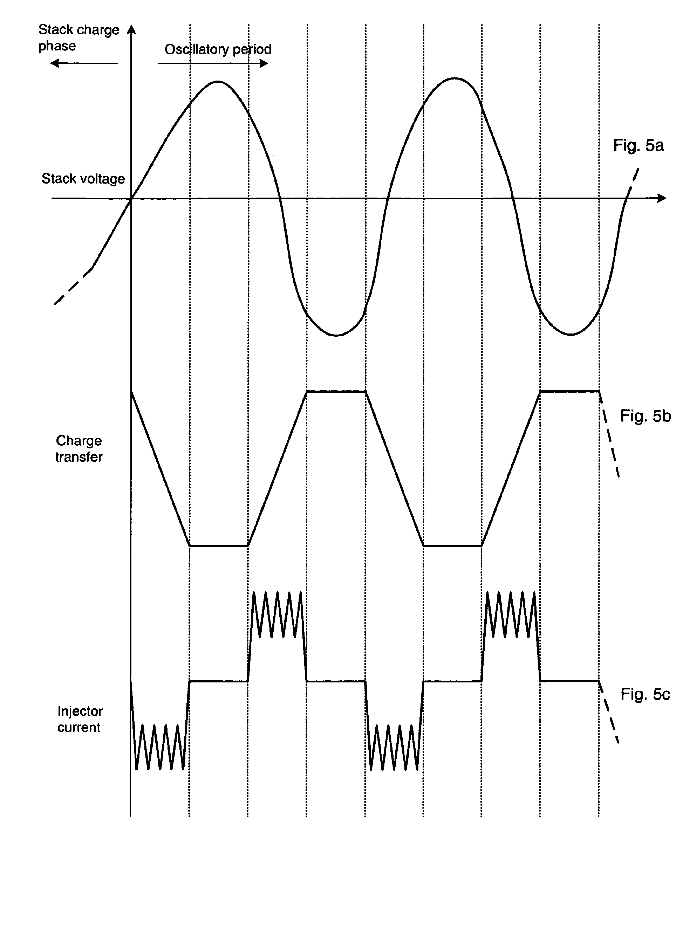

Referring also to Figure 5a, there is shown the approximately sinusoidal oscillation of the actuator voltage following a charge phase (to the left of the Y-axis). In order to compensate for the sinusoidal voltage oscillation, the ICU 20 applies a secondary drive energy pulse sequence (hereafter 'noise suppression pulse sequence') to the injector INJ1 in order to generate a charge transfer profile that is the mirror image of the actuator voltage during the oscillation period T_{P}, as shown in Figure 5b. Put another way, the charge transfer profile is configured to have substantially the same frequency as the injector voltage profile, but is phase-shifted substantially through one hundred and eighty degrees. The chopped actuator drive current waveform required to produce the charge transfer profile of Figure 5b is shown in Figure 5c. It should be appreciated that the noise suppression pulse sequence includes a plurality of single noise suppression pulses.

Following the initiation of the noise suppression method at step 502, at step 504 the ICU 20 monitors the status of a timer (hereafter 'noise suppression timer') so as to determine when an appropriate noise suppression pulse sequence should be applied to the actuator. In this embodiment, the noise suppression pulse sequence is initiated a predetermined time after the start of injector discharge (i.e. a predetermined time after T₀ on Figure 4a). The exact time at which the noise suppression pulse sequence needs to start is largely dependent on the overall length of the main fuel injection pulse (i.e. the noise suppression pulse sequence starts at the end of the primary drive energy pulse). Therefore, the ICU 20 stores a plurality of timer offset values, each offset value corresponding to a different configuration of primary drive energy pulse length. Thus, in order to determine when the initiate the noise suppression pulse sequence, the ICU 20 reads the appropriate timer offset value that corresponds to the current configuration of main fuel injection pulse.

When the ICU 20 determines that the count on the noise suppression timer reaches the timer offset value, the process moves to step 506 at which point the ICU 20 determines the required frequency of the charge transfer profile that is required to be applied to the injector. Since the frequency of the fluctuating energy signature is a function of the dimensions of the fuel passages within the nozzle body, and the mechanics of the actuator itself, the appropriate frequency for the charge transfer profile is determined in an off-line environment e.g. via system testing and stored within the memory of the ICU 20. Thus, in this embodiment, the ICU 20 determines the appropriate frequency of the noise suppression pulse sequence by reading the frequency value that is stored in the memory. However, it should be mentioned at this point that although it is preferred that a single frequency value is used for computational efficiency, it should be appreciated that this need not be the case and the frequency of the fluctuating energy signature could alternatively be determined in real time such that a feedback mechanism is provided to allow for adaptive frequency control of the required noise suppression pulse sequence.

Once the frequency value of the noise suppression pulse sequence has been determined, at step 506, the process continues to step 508 at which point the ICU 20 controls the injector drive circuit 26 in order to apply the appropriate injector drive current waveform (as shown in Figure 5c) to provide the required charge transfer profile (as shown in Figure 5b).

The ICU 20 applies the noise suppression pulse sequence for a predetermined time period that is calculated as the time required for the fluid oscillations within the fuel passageways in the injector body to dampen to acceptable levels. This predetermined time period is a stored variable, the value of which is determined empirically though off-line system testing.

Following the expiry of the predetermined noise suppression time period, application of the noise suppression pulse sequence is terminated at step 510 and the process returns to a wait state (shown as 100 in Figure 3) in readiness for the next injection command.

It should be appreciated that various modifications may be made to the above described embodiment without departing from the scope of the invention as defined by the claims.

For example, in the above embodiment, the noise suppression method includes the step of initiating the noise suppression pulse sequence a predetermined time period after the start of the injector discharge phase (shown as T₀ on Figure 4a) depending on the length of the main fuel injection pulse. However, it should be appreciated that the ICU 20 could also schedule the noise suppression pulse sequence to start a predetermined time after the start of the injector charge phase, shown on Figure 4a as T₂, since T₀ and T₂ are both parameters that are known and controlled by the ICU 20.

Although the above method describes essentially an open loop system in which a predetermined injection pulse sequence is applied to the actuator, the invention also contemplates that the application of the noise suppression pulse sequence could be incorporated in a closed loop system in order to minimise the noise emitted from the injector. To this end, the initiation point of the noise suppression pulse sequence could be tuned over the course of several main fuel injection pulses in real-time, during operation of the injector, in order to identify the most effective reduction of noise that is emitted from the injector. Moreover, as a further enhancement, the amplitude of successive pulses in the noise suppression pulse sequence could be configured to reduce in magnitude over time, for example to match the natural rate of decay of the fluctuating energy signature, thus guarding against unwanted excitation of the actuator.

Also, in the embodiment described above, the noise suppression pulse sequence is applied to the actuator after the main fuel injection pulse so as to counteract the fluctuating energy signature. However, as an alternative, or in addition, a noise suppression pulse sequence could also be applied to the actuator before it is activated i.e. prior to the start of the discharge phase. In this manner, it is possible to generate electrical activity within the injector prior to an injection event that may improve the way the stack responds during, and after, an injection event.

## Claims

1. A method of operating a piezoelectric device (2) having a piezoelectric actuator (4) including:
i) activating the device (2) by applying a primary drive energy pulse to the actuator (4);
ii) deactivating the device (2) by terminating the primary drive energy pulse applied to the actuator (4);
iii) determining a fluctuating actuator energy signature;
iv) applying at least one secondary drive energy pulse to the actuator (4) a predetermined time after the application of the primary drive energy pulse so as to attenuate the fluctuating energy signature.

2. The method of claim 1, wherein the step of determining a fluctuating energy signature takes place in real time, during operation of the device (2).

3. The method of claim 1 or claim 2, wherein the at least one secondary drive energy pulse has a magnitude that is less than the primary drive energy pulse such that the device is not activated.

4. The method of any one of claims 1 to 3, wherein the at least one secondary drive energy pulse has a frequency selected to be substantially equal to the frequency of the fluctuating actuator energy signature.

5. The method of any one of claims 1 to 4, wherein the at least one secondary drive energy pulse is phase-shifted from the fluctuating actuator energy signature by approximately 180 degrees.

6. The method of any one of claims 1 to 5, wherein the start of the at least one secondary drive energy pulse is triggered a predetermined time after the initiation of the primary drive energy pulse.

7. The method of any one of claims 1 to 5, wherein the start of the at least one secondary drive energy pulse is triggered a predetermined time after the termination of the primary drive energy pulse.

8. The method of claim 6 or claim 7, wherein the predetermined time for initiating the at least one secondary drive energy pulse is calculated based on the length of the primary drive energy pulse.

9. The method of any one of claims 1 to 5, wherein the start of the secondary drive energy pulse is determined in real-time as part of a closed loop control system.

10. The method of any one of claims 1 to 9, wherein a further secondary drive energy pulse is applied to the actuator (4) prior to the primary drive energy pulse.

11. The method of any one of claims 1 to 10, wherein the at least one secondary drive energy pulse is a sequence of a plurality of pulses.

12. The method of claim 11, wherein the sequence of pulses is applied to the actuator (4) for a predetermined time, and wherein the predetermined time is calculated based on the natural duration of the fluctuating energy signature.

13. The method of claim 11 or claim 12, including reducing the amplitude of successive pulses in the sequence.

14. A method of operating a piezoelectric device (2) having a piezoelectric actuator (4) including:
i) activating the device (2) by applying a primary drive energy pulse to the actuator (4);
ii) deactivating the device (2) by terminating the primary drive energy pulse applied to the actuator (4);
iii) determining a fluctuating actuator energy signature;
iv) applying at least one secondary drive energy pulse to the actuator (4) a predetermined time before the application of the primary drive energy pulse so as to attenuate the fluctuating actuator energy signature.

15. The method of any of claims 1 to 14, wherein the piezoelectric device is a piezoelectrically operated fuel injector.

16. A computer program product comprising at least one computer program software portion which, when executed in an executing environment, is operable to implement the method of any one of claims 1 to 15.

17. A data storage medium having the or each computer software portion of claim 16 stored thereon.

18. A microcomputer provided with the data storage medium of claim 17.
